# FASCICULE DE BREVET EUROPEEN

(11) **EP 2 282 369 B1**
(45) Date de publication et mention de la délivrance du brevet: **18.07.2012**
(21) Numéro de dépôt: 10172211.4
(22) Date de dépôt: 06.08.2010
(51) Int. Cl.: H01M 8/04, H01M 8/06, C01B 3/32, C01B 3/38, C10L 3/08

(54) **Dispositif de production d'électricité et de chaleur, incluant une pile à combustible admettant au moins du méthane comme combustible**
Strom- und Wärmeerzeugungsvorrichtung, die eine Brennstoffzelle umfasst, die mindestens Methan als Brennstoff zulässt
Device for producing electricity and heat, including a fuel cell accepting at least methane as fuel

(30) Priorité: 06.08.2009 FR 0955541
(43) Date de publication de la demande: 09.02.2011
(73) Titulaire: FRANCO CELL, 78240 Chambourcy (FR)
(72) Inventeur: Couturier, François, 92100, Boulogne Billancourt (FR); Escabasse, Edmond, 78240, Chambourcy (FR); Lemarignier, Marc, 75006, Paris (FR); Alloteau, Fanny, 75002, Paris (FR)
(74) Mandataire: Thinat, Michel

(56) Documents cités:
- EP-A1- 0 238 173
- EP-A1- 1 768 207
- EP-A2- 1 603 181
- DE-A1- 10 300 466
- JP-A- 8 321 321
- JP-A- 57 199 183
- US-A- 5 736 026
- US-A1- 2004 219 400
- LEAL E M ET AL: "Study of fuel cell co-generation systems applied to a dairy industry", JOURNAL OF POWER SOURCES, ELSEVIER SA, CH LNKD- DOI:10.1016/S0378-7753(01)01020-5, vol. 106, no. 1-2, 1 avril 2002 (2002-04-01), pages 102-108, XP004348675, ISSN: 0378-7753
- COCCO D ET AL: "Use of alternative hydrogen energy carriers in SOFC-MGT hybrid power plants", ENERGY CONVERSION AND MANAGEMENT, ELSEVIER SCIENCE PUBLISHERS, OXFORD, GB LNKD- DOI:10.1016/J.ENCONMAN.2008.12.019, vol. 50, no. 4, 1 avril 2009 (2009-04-01), pages 1040-1048, XP025991546, ISSN: 0196-8904 [extrait le 2009-01-24]

## Description

La présente invention concerne un dispositif de production d'énergie, comprenant une pile à combustible admettant au moins du méthane comme combustible, ainsi qu'une source de méthane pour la pile. Ces dernières années, l'intérêt porté aux piles à combustibles s'est accru en raison de leur production d'énergie non polluante et de leur efficacité électrique supérieure à la production par moteurs et turbines thermiques.

En effet, au sein d'une pile à combustible, la production d'électricité est réalisée par oxydation sur une électrode d'un combustible réducteur, couplée à la réduction sur l'autre électrode d'un oxydant, et génère majoritairement de l'eau.

En outre, une pile à combustible admettant notamment le méthane comme combustible, présente, par rapport à celles alimentées directement en dihydrogène, l'avantage de résoudre les problèmes liés à la production, au transport et au stockage du dihydrogène. Ce type de pile est décrit dans le document EP 1 768 027.

La première source de méthane disponible, est le gaz naturel qui contient plus de 80% de méthane. Cependant, bien que plusieurs sources de gaz naturel soient répandues sur terre, certaines zones géographiques se trouvent dans l'impossibilité d'être alimentées en gaz. En outre, malgré l'abondance du gaz naturel, il n'en demeure pas moins une ressource épuisable que les actuelles préoccupations environnementales préconisent d'épargner. Enfin les émissions de CO₂ liées à l'utilisation de gaz naturel dans les procédés de production énergétique contribuent à l'augmentation des émissions de CO₂ fossile et donc à l'accroissement de l'effet de serre.

Une autre voie connue de production de méthane, la méthanisation, s'avère également insatisfaisante puisque le méthane fabriqué durant ce procédé par les matières organiques, l'est souvent de façon discontinue occasionne en conséquence une alimentation irrégulière de la pile. Par ailleurs, les gaz issus des processus de méthanisation peuvent présenter des variations importantes de leur composition en raison de phénomènes d'instabilité inhérents aux caractéristiques essentiellement biologiques du processus.

Pour les zones géographiques isolées des grands réseaux électriques et très fortement dépendantes d'approvisionnements en hydrocarbures il n'existe pas, à ce jour, de solution de production d'énergie renouvelable multi-mégawatts en base à haut rendement électrique hormis l'hydraulique, la géothermie, l'énergie marine qui toutes requièrent des environnements géographiques très particuliers.

L'invention vise à pallier ces inconvénients.

A cet effet, l'invention concerne un dispositif de production d'énergie, incluant une pile à combustible admettant au moins du méthane comme combustible, ainsi qu'une source de méthane pour la pile selon la revendication 1.

Selon l'invention, le dispositif comprend une unité de transformation d'un alcool en méthane alimentant au moins en méthane la pile à combustible.

Selon une autre caractéristique de l'invention, la pile à combustible admet comme combustible un mélange de méthane et de vapeur d'eau à une température et une pression prédéterminées, et l'unité de transformation transforme un mélange gazeux d'éthanol et d'eau en un mélange de méthane et vapeur d'eau pour alimenter la pile, la pression du mélange gazeux méthane et vapeur d'eau issu de l'unité de transformation étant supérieure la pression du mélange méthane et vapeur d'eau admis par la pile, et exploitée comme source secondaire d'énergie.

Selon une autre caractéristique, la pression du mélange gazeux méthane et vapeur d'eau issu de l'unité de transformation (11) est supérieure à 2 bar.

Selon une autre caractéristique, la pression du mélange gazeux méthane et vapeur d'eau issu de l'unité de transformation (11) est comprise entre 10 et 40 bar.

Selon une autre caractéristique, l'unité de transformation est un reformeur et la pression du mélange gazeux méthane et vapeur d'eau sortant du reformeur est sensiblement égale à la pression du mélange gazeux d'éthanol et d'eau admis par le reformeur, le dispositif comprenant une unité de mise sous pression d'un mélange liquide d'éthanol et d'eau, apte à fournir un mélange gazeux pressurisé d'éthanol et d'eau à la pression supérieure à celle du mélange méthane et vapeur d'eau admis par la pile et des moyens de chauffage du mélange gazeux pressurisé d'éthanol et d'eau.

Selon une autre caractéristique, pour exploiter la pression supérieure du mélange gazeux sortant du reformeur, le dispositif comprend une turbine de conversion en électricité interposée entre l'unité de transformation et la pile.

Selon une autre caractéristique, la température du mélange méthane et vapeur d'eau produit par le reformeur est supérieure à celle du mélange méthane et vapeur d'eau admis par la pile et exploitée comme source secondaire d'énergie.

Selon une autre caractéristique, pour exploiter la chaleur produite par le reformeur, le dispositif comprend un échangeur thermique interposé entre le reformeur et la pile.

Selon une autre caractéristique, le reformeur est le siège d'une réaction exothermique, et en ce que la chaleur dégagée par cette réaction exothermique est transférée par un échangeur thermique vers le mélange d'éthanol et d'eau admis au sein du reformeur pour chauffer ce mélange.

Selon une autre caractéristique, le reformeur comprend un lit catalytique à base de métal, de préférence le nickel.

De préférence, la moitié de la chaleur produite par la pile est utilisée pour le chauffage du mélange d'eau et d'éthanol lors de son transit dans le circuit d'entrée de l'unité de transformation.

Avantageusement, le dispositif comprend un échangeur thermique entre une deuxième partie de la chaleur produite par la pile haute température et un premier récepteur de chaleur.

Dans ce cas, le récepteur de chaleur est une turbine de conversion en électricité de la deuxième partie de la chaleur produite par la pile haute température et/ou un échangeur thermique.

Autrement, le récepteur de chaleur est un système de désalinisation d'eau de mer utilisant la deuxième partie de la chaleur produite par la pile haute température.

En outre, le dispositif comprend une recirculation du mélange gazeux produit par la pile vers le mélange d'eau et d'éthanol alimentant l'unité de transformation.

Dans ce cas, la recirculation du mélange gazeux produit par la pile comprend un dispositif d'épuration du mélange gazeux apte à débarrasser ce mélange gazeux de composés gazeux indésirables tels que le dioxyde de carbone.

L'invention concerne également un procédé de production d'énergie, à partir d'un dispositif comprenant une pile à combustible admettant comme combustible un mélange de méthane et de vapeur d'eau à une température et une pression prédéterminées, ainsi qu'une unité de transformation d'un mélange gazeux d'éthanol et d'eau en un mélange de méthane et vapeur d'eau alimentant la pile selon la revendication 17.

Selon l'invention, la pression du mélange gazeux méthane et vapeur d'eau issu de l'unité de transformation est supérieure la pression du mélange méthane et vapeur d'eau admis par la pile, le procédé comprenant une étape d'exploitation de cette pression supérieure comme source secondaire d'énergie.

L'invention concerne en outre l'utilisation du dispositif ci-dessus défini pour produire de l'électricité, de la chaleur et/ou du méthane.

Plus précisément, la chaleur et/ou l'électricité produites peuvent alimenter un dispositif de désalinisation d'eau de mer et/ou un dispositif de déshydratation d'éthanol.

Egalement, le méthane produit par l'unité de transformation peut servir de système d'appoint à une pile à combustible admettant du méthane comme combustible, alimentée par une source principale de méthanisation permettant de pallier les variations de débit des méthaniseurs et de stabiliser l'alimentation en méthane.

L'invention sera mieux comprise et d'autres buts, avantages et caractéristiques de celle-ci apparaîtront plus clairement à la lecture de la description qui suit et qui est faite uniquement à titre d'exemple de réalisation de l'invention, au regard des dessins annexés parmi lesquels :
- la figure 1 est un schéma de principe du dispositif selon l'invention ;
- la figure 2 illustre un exemple de pile à combustible pouvant être utilisée au sein du dispositif de la figure 1.

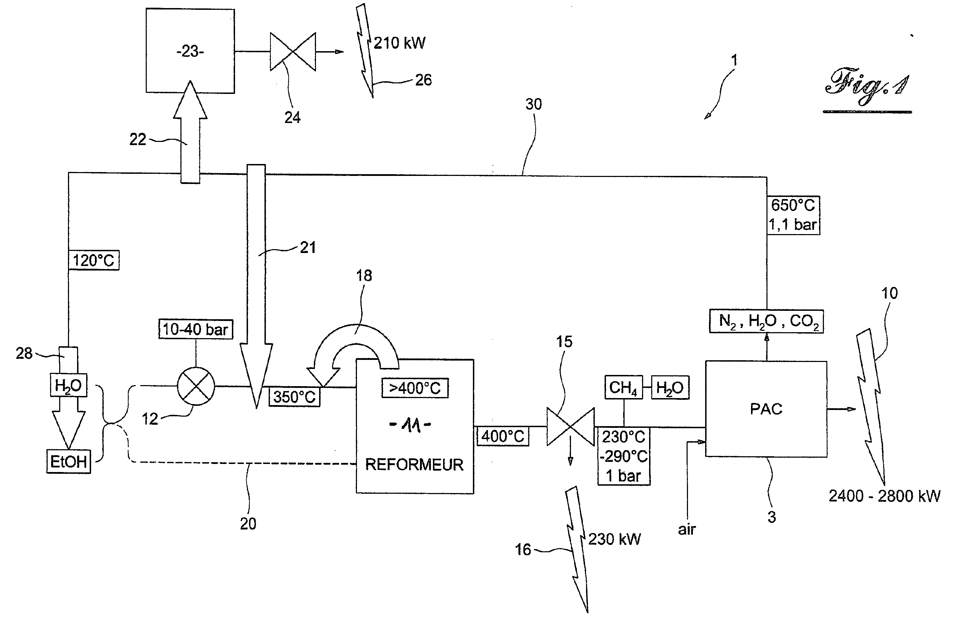

Sur la figure 1 est représenté un dispositif de production d'énergie selon l'invention 1, incluant une pile à combustible 2 admettant au moins du méthane comme combustible, ainsi qu'une source de méthane pour la pile prenant la forme de l'unité de transformation ou reformeur 11.

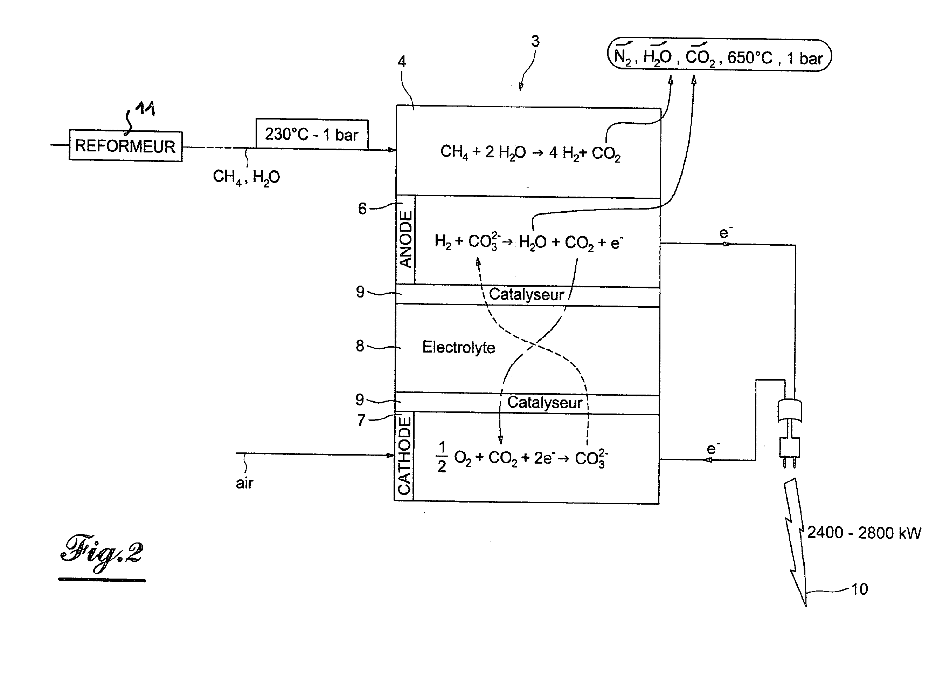

Plus précisément, tel que visible sur la figure 2, une pile à combustible convenant pour être utilisée au sein du dispositif selon l'invention est une pile à haute température telle qu'une Pile à combustible à carbonate fondu dite MCFC (acronyme de Molten Carbonate Fuel Cell pour Pile) qui comprend :
- un module de reformage interne 3 apte à faire réagir à haute température de la vapeur d'eau avec du méthane pour produire du dihydrogène et du dioxyde de carbone, par une réaction endothermique,
- un compartiment anodique 6 où le dihydrogène généré dans le module de reformage interne réagit avec les ions carbonates produits à la cathode pour générer de l'eau, du dioxyde de carbone et des électrons, par une réaction exothermique,
- un compartiment cathodique 7 où le dioxyde de carbone crée à l'anode réagit avec l'oxygène alimentant la pile en consommant des électrons pour former les ions carbonates précités consommés à la cathode,
- un électrolyte en principe constitué de carbonate de potassium 8, séparant les compartiments anodique et cathodique l'un de l'autre, permettant le passage du dioxyde de carbone de l'anode à la cathode, et des ions carbonates de la cathode à l'anode, cet électrolyte étant lui même séparé de chaque compartiment par un catalyseur approprié 9.

Comme mentionné précédemment, le fonctionnement d'une telle pile est propre car les produits de son fonctionnement sont principalement l'azote (environ 60%), la vapeur d'eau (plus de 20%), l'oxygène (9%) et le dioxyde de carbone dans une moindre mesure (autour de 5%) sachant que celui ci pourra être éliminé lors du fonctionnement du dispositif, tel que décrit ultérieurement.

Tant que la pile est alimentée en méthane, vapeur d'eau et oxygène à une température d'environ 230°C et une pression de l'ordre de 1.1 bar, elle est capable de fournir de l'électricité à hauteur de 2400-2800 kW pour l'exemple illustré, et constitue une source primaire d'électricité 10 pour le dispositif selon l'invention.

Pour alimenter la pile en méthane et vapeur d'eau, la source de méthane choisie pour le dispositif selon l'invention comprend une unité de transformation d'un mélange éthanol-eau, en un mélange gazeux méthane-vapeur d'eau, à une pression supérieure, voire largement supérieure (2 à 40 fois ou plus) à celle du mélange gazeux méthane-vapeur d'eau admis par la pile.

Et tel qu'illustré sur la figure 1, cette unité prend la forme du reformeur 11 qui est monté à l'entrée de la pile à combustible afin de l'approvisionner en méthane et en vapeur d'eau.

Plus précisément, pour son bon fonctionnement, le reformeur est alimenté en un mélange gazeux constitué à parts environ égales de vapeur d'eau et d'éthanol et porté à une température de l'ordre de 350°C et à une pression comprise entre 10 et 40 bars, par une pompe de pressurisation 12 située en amont du reformeur. Les données du schéma énergétique de la figure 3 ont été relevées pour une pression du mélange éthanol-eau de l'ordre de 16 bar.

Au sein du reformeur, un lit catalytique à base de nickel, constitué par exemple de billes contenant au moins 7% de nickel, sur un support d'alumine, permet la conversion du mélange éthanol-vapeur d'eau préalablement chauffé et pressurisé. Egalement, le catalyseur décrit dans la demande de brevet GB 1 525 017, qui contient 50 à 65% en poids de nickel, convient pour accélérer la transformation du mélange éthanol eau, en un mélange méthane et vapeur d'eau. Etant donné que cette réaction est exothermique, il règne au sein du reformeur une température comprise entre approximativement 350°C et 450°C.

Avec un catalyseur adapté, et lorsque les conditions de température, de pression, de dilution optimales du mélange d'éthanol et d'eau sont réunies, à savoir autour de 350°C-450°, entre 10 et 40 bar et un mélange éthanol-eau à parts égales, on récupère en sortie de reformeur un mélange contenant :
- plus de 60 % de CH₄
- moins de 15% de dihydrogène
- environ 25% de CO₂.

La constitution de ce mélange le rend apte à alimenter la pile.

En outre, il a été remarqué que les performances de la pile alimentée par les gaz issus du reformeur sont d'autant meilleures que la teneur du mélange gazeux issu du reformeur est faible en H₂ et CO (inférieure à 20%) et que celle de CO₂ est inférieure à 40%.

Par exemple, pour diminuer la teneur en H₂, il est possible d'augmenter la pression du reformeur jusqu'à par exemple 40 bar. Concrètement, lorsque la pression régnant au sein du reformeur est de l'ordre de 30 bar, la teneur en H₂ et CO du mélange gazeux riche en méthane issu du reformeur a été mesurée à 7% et les performances de la pile améliorées en conséquence.

La teneur en CO₂ est nécessairement inférieure à 40% puisque celle en méthane est recherchée comme supérieure à 60%.

Cette source de méthane présente notamment l'avantage d'une production régulière par rapport au procédé de méthanisation préalablement cité, et sans contrainte géographique contrairement aux sources éparses de gaz naturel.

En outre, le rendement électrique global du dispositif selon l'invention est comparable à celui obtenu lorsque la pile est alimentée en gaz naturel.

Le rendement électrique est calculé comme le rapport entre la puissance électrique nette produite par le dispositif sur la puissance thermique de l'éthanol consommé, cette dernière étant exprimée en PCI (Pouvoir calorifique inférieur).

Le dispositif selon l'invention est conçu pour que son fonctionnement requiert aussi peu d'énergie que possible, et que son rendement énergétique soit aussi important voire supérieure à celui des dispositifs existants.

Pour atteindre ce but, on exploite les différentes sources de chaleur naturellement créées par le fonctionnement du dispositif selon l'invention afin de les utiliser pour le chauffage du mélange éthanol-eau en aval de celle-ci, et on crée des sources d'énergie électriques primaires supplémentaires.

### Valorisation de la chaleur :

En effet, il est possible de valoriser la chaleur générée par une source de chaleur non consommatrice d'énergie, telle que la chaleur générée lors du fonctionnement du dispositif lui-même, en exploitant le caractère exothermique de la réaction au sein du reformeur qui a déjà été évoqué.

En effet, comme le représente la flèche repérée par 18 sur la figure 1, la chaleur générée au sein du coeur du reformeur est réutilisée pour contribuer au réchauffement à 350°C du mélange gazeux éthanol et vapeur d'eau lors de son transit dans le circuit d'entrée du reformeur.

La chaleur excédentaire générée par la réaction de reformage au sein du coeur du reformeur est évacuée vers le circuit d'entrée du mélange gazeux éthanol et vapeur d'eau permettant d'une part de maintenir constante la température du coeur du reformeur entre des valeurs optimales grâce auxquelles sont obtenus les 60% minimum de méthane en sortie et d'autre part de réduire les apports énergétiques externes pour le réchauffage du mélange gazeux éthanol et eau avant son passage dans le coeur du reformeur. Le choix de la gamme de température de fonctionnement et le maintien d'une température constante au sein du coeur du reformeur évitent une dégradation du catalyseur utilisé.

Afin de contribuer encore à réguler la température de fonctionnement du reformeur, il est possible, tel que le représente schématiquement la ligne pointillée repérée par 20 sur la figure 1, d'introduire une faible quantité d'eau et d'éthanol dans le coeur du reformeur (moins de 20% des produits d'admission du reformeur) alors qu'ils se présentent sous une forme liquide.

Egalement, la chaleur du mélange gazeux produit par le reformeur à 400°C alors que la température du mélange admis par la pile devrait être de l'ordre de 230-290°C, peut être mise à profit au moyen d'un échangeur thermique, non représenté, qui capterait cette chaleur et la transférerait à un autre récepteur de chaleur.

Une autre source de chaleur générée lors du fonctionnement du dispositif lui-même, et pouvant être exploitée pour éviter d'utiliser une source d'énergie supplémentaire, est la chaleur de la pile qui est dégagée lors de son fonctionnement, c'est à dire la chaleur du mélange gazeux qu'elle produit à environ 650°C, tel que le représentent les flèches 21 à 23 de la figure 1.

Une partie de cette chaleur, environ 50% dans l'exemple illustré, peut être transférée au moyen d'un échangeur thermique au mélange gazeux éthanol et vapeur d'eau lors de son transit dans le circuit d'entrée du reformeur.

La conjonction de l'apport partiel de chaleur générée par la pile au reformeur et de l'exploitation de la chaleur excédentaire générée par la réaction de reformage pour porter le mélange éthanol et vapeur d'eau à 350°C remplace partiellement ou entièrement, en régime permanent de fonctionnement de l'unité, le besoin de recourir à une unité de chauffage de ce mélange indépendante du procédé. Ce principe permet ainsi de diminuer l'énergie externe à fournir pour faire fonctionner le dispositif selon l'invention.

Egalement, le mélange gazeux produit par la pile à 650°C, permet de générer deux sources supplémentaires de chaleur 22 et 28 participant à l'augmentation du rendement énergétique global du dispositif selon l'invention.

Par exemple, une deuxième partie de la chaleur produite par la pile peut être utilisée, comme l'indique la flèche 22 repérée sur la figure 1, pour alimenter un échangeur thermique 23 relié à un récepteur de chaleur qui peut être un échangeur de chaleur 23 d'un dispositif distinct, tel qu'un dispositif de désalinisation d'eau de mer ou un dispositif de déshydratation d'éthanol.

Le récepteur de chaleur peut également être constitué par une turbine apte à convertir cette chaleur en électricité de façon à créer une source d'électricité supplémentaire, tel que mieux décrite ci-après.

Une fois que la chaleur de la pile a été redirigée vers l'entrée du reformeur selon la flèche 21, et vers l'échangeur thermique 23 selon la flèche 22, la chaleur restante peut être utilisée pour préchauffer l'eau et l'éthanol en amont du reformeur.

L'eau et l'éthanol peuvent ainsi être préchauffés alors qu'ils se présentent tous deux sous la forme liquide, tel que représenté par la flèche 28 de la figure 1, c'est à dire en amont de la pompe 12, ou bien une fois pressurisés à 10-40 bar par la pompe 12, cette variante n'étant pas illustrée sur la figure 1.

### Création de sources d'énergies électriques supplémentaires :

Par rapport aux dispositifs utilisant des sources de méthane de type connu, le dispositif selon l'invention permet de générer, comme l'illustre la figure 1, des sources secondaires d'électricité secondaires 16 et 26, venant en complément de la production d'électricité primaire de la pile 10.

Plus précisément, comme mentionné précédemment, et pour les besoins de production par le reformeur d'un mélange gazeux aussi riche en méthane et aussi pauvre en dihydrogène possible, le mélange d'éthanol et d'eau admis par le reformeur est hautement pressurisé à plus de 2 bars et de préférence entre 10 et 40 bars.

Il est à noter que la phase de pressurisation du mélange éthanol eau ne consomme pas énormément d'énergie puisque les éléments à mettre sous pression se présentent sous la forme liquide.

Une fois que ce mélange a été pressurisé et préchauffé, il est introduit au sein du reformeur. Et comme la pression régnant au sein du reformeur est relativement constante, le mélange gazeux riche en méthane sortant de ce reformeur présente également une pression supérieure à 2 bars et préférentiellement de l'ordre de 10 à 40 bars.

La pression du mélange gazeux riche en méthane issu du reformeur est donc relativement élevée par rapport à la pression de l'ordre de 1 bar du mélange gazeux admis par la pile. Par ailleurs, le mélange gazeux en sortie du reformeur est à une température sensiblement supérieure à la température d'admission dans la pile.

Ce sont ces caractéristiques de pression et de température supérieures à celles admises par la pile qui seront exploitées pour créer une première source secondaire d'électricité.

Pour exploiter ces caractéristiques de pression et de température excédentaires, il est donc avantageux d'interposer entre la sortie du reformeur 11 et l'entrée de la pile à combustible 3 une turbine de détente 15.

Dans l'exemple représenté, la turbine permet de détendre le mélange gazeux riche en méthane de 16 à 1.1 bar, ce dont résulte une baisse de la température de ce mélange de 400°C à 230-290°C et une production d'électricité d'une puissance de l'ordre de 230 kW.

La turbine 15 constitue ainsi une première source secondaire d'électricité 16 générant une puissance électrique en supplément de celle générée par la pile venant s'ajouter à cette énergie électrique primaire 10.

Cette première source secondaire d'électricité 16, apporte ainsi une contribution supplémentaire et non négligeable à l'électricité fournie par la pile 3.

Dans l'exemple illustré où la pression au sein du reformeur est de l'ordre de 16 bars, l'énergie électrique supplémentaire produite par la turbine représente environ 10% de l'énergie électrique produite par la pile seule, et augmente ainsi d'environ 5 points le rendement électrique global du dispositif selon l'invention.

Une autre façon d'utiliser l'énergie du mélange gazeux riche en méthane issu du reformeur, et plus particulièrement sa température de l'ordre de 400°C qui est bien supérieure à celle du mélange admis par la pile, est d'interposer entre le reformeur et la pile, un échangeur de chaleur permettant un transfert de cette chaleur excédentaire vers un récepteur de chaleur, cette variante n'étant pas illustrée sur les figures.

Selon l'écart en température et en pression du mélange gazeux sortant du reformeur et celui admis par la pile, on pourra utiliser soit une turbine, soit une turbine et un échangeur thermique les deux étant montés en parallèle.

Au contraire, lorsque la température et la pression du mélange gazeux issu du reformeur sont égales à celles admises par la pile, une utilisation directe par la pile de ce mélange est possible.

Une deuxième source secondaire d'électricité peut être créée grâce encore à la chaleur du mélange gazeux sortant à environ 650°C de la pile. En effet, une turbine de cogénération 24 de type machine de Rankine, apte à transformer cette chaleur en électricité, peut être montée en aval de la pile, après un échangeur thermique 23 ou sans un tel échangeur 23, et créer ainsi une source secondaire d'électricité 26.

Dans l'exemple représenté, la turbine de cogénération 24 produit de l'énergie électrique d'une puissance d'environ 210 kW, ce qui représente un surplus d'approximativement 10% par rapport à la puissance électrique générée par la pile seule. Etant donné que l'échangeur thermique 23 et la turbine de cogénération 24 consomment peu voire aucune énergie pour leur fonctionnement, la deuxième source secondaire d'électricité qu'ils forment 26 augmente encore d'environ 5 points le rendement électrique global du dispositif selon l'invention.

Ces deux sources d'énergie électriques supplémentaires 16 et 26 venant s'ajouter à la source primaire d'électricité 10 que constitue la pile, permettent au dispositif selon l'invention d'avoir un rendement électrique supérieur à 55%.

Il est possible de récupérer les produits issus de la turbine de cogénération 24 qui est d'une température de l'ordre de 120°C, comme source de chaleur modérée, pour par exemple réchauffer le mélange eau éthanol en amont du reformeur.

Dans ce cas, l'eau contenue dans ces produits peut être exploitée pour alimenter le mélange eau éthanol en amont du reformeur après dégazage (suppression du CO₂) et purification.

Autrement, il est possible d'utiliser cette source de chaleur modérée en combinaison avec un autre échangeur thermique.

Grâce à l'utilisation de la chaleur générée par la pile pour générer des sources secondaires d'électricité 16, 26 et des sources de chaleur 18, 21, 28 utiles pour le fonctionnement interne du dispositif, le rendement global énergétique du dispositif selon l'invention, à savoir le rapport entre l'énergie produite par le dispositif et l'énergie consommé est important.

En outre, au moins une partie de l'eau nécessaire au fonctionnement du dispositif est issue du mélange gazeux rejeté par la pile qui est recirculé via la ligne de recirculation 30 repérée sur la figure 1.

Ce mélange, qui contient de l'azote et du dioxyde de carbone en plus de la vapeur d'eau peut idéalement subir une étape de purification et de dégazage du CO₂.

Concernant l'éthanol, celui-ci peut avantageusement être obtenu à partir de plantes à croissance rapide telles que les cannes à sucre, desquelles est obtenu le sucre de canne, qui par fermentation produit l'éthanol sous forme liquide et hydratée.

Le fait que les plantes à partir desquelles est fabriqué l'éthanol aient une croissance rapide en fait des ressources renouvelables.

L'éthanol constitue donc un biocarburant préférentiel parmi les autres alcools pouvant alimenter un reformeur afin qu'il produise du méthane, car il peut être fabriqué en grande quantité et n'est pas nocif pour l'environnement.

Le dispositif tel que décrit précédemment présente différents avantages parmi lesquels :
- L'unité de transformation réalise le vaporeformage sous pression d'un mélange eau/éthanol .Le gaz de synthèse issu de l'unité de transformation est injecté dans une turbine de détente elle-même couplée à un dispositif de production d'électricité additionnelle. A l'issue de leur transit dans la turbine de détente, la pression du gaz de synthèse est redescendue à une valeur comprise entre 1 et 1,5 bar. Cette opération produit un gain énergétique qui est un avantage de l'invention.
- Cette installation se distinguant notamment par un rendement électrique supérieur à 55% grâce à une conception qui optimise son efficacité thermodynamique de bout en bout.
- Elle est conçue pour réduire tous apports extérieurs en eau nécessaire au fonctionnement du procédé,
- La combinaison dans la même installation de l'usage d'un biocombustible, d'une pile chaude utilisant les propriétés oxydantes de l'air (en injection sur la cathode), permet la concentration dans les effluents du système, sous forme de CO₂, d'une part du carbone contenu dans le biocombustible et d'autre part du carbone présent sous forme de CO₂ dans l'air injecté dans la pile, offrant la possibilité d'accéder à un bilan carbone négatif après séquestration du carbone contenu dans les effluents gazeux,
- Le fait d'impliquer une source de méthane au débit relativement constant, et utilisant des matières premières, l'eau et l'éthanol, renouvelables,
- le fait d'obtenir un rendement électrique similaire à celui obtenu avec un dispositif incluant une pile à combustible alimentée en gaz naturel lorsque le mélange gazeux admis au sein du reformeur, est chauffé par la chaleur même de la pile,
- le fait de pouvoir chauffer le mélange gazeux admis au sein du reformeur par une autre source d'énergie disponible sur le lieu d'installation du dispositif selon l'invention, telle qu'un conduit véhiculant de la vapeur à haute température,

- le fait d'augmenter encore ce rendement électrique en utilisant la chaleur développée durant le fonctionnement du reformeur et une partie de celle de la pile, pour créer des sources secondaires d'énergie,
- le fait que l'une des matières premières, l'eau, soit l'un des produits issus de la pile en fonctionnement et puisse être recirculé,
- le fait qu'une autre matière première, l'éthanol, soit une ressource renouvelable, pouvant présenter des taux d'hydratation supérieurs à 50% à l'image de l'éthanol industriel, sans nuire au fonctionnement du dispositif, puisque l'autre matière première est justement constituée par l'eau,
- le fait que les produits générés lors du fonctionnement du dispositif soient inoffensifs pour l'environnement,
- la possibilité pour la constitution de la pile à combustible, d'utiliser une pile disponible du commerce de type MCFC au sein de laquelle les modules d'hydratation, de désulfuration et de conversion des hydrocarbures, utiles lorsque la pile est alimentée en gaz naturel, mais non nécessaires lorsqu'elle est alimentée par le mélange gazeux issu du reformeur du dispositif selon l'invention, seraient court-circuités et ne conserver que le module de reformage interne du méthane en dihydrogène et les compartiments anodiques et cathodiques de la pile,
- l'avantage d'utiliser une pile incluant un reformage interne pour alimenter directement le compartiment anodique en dihydrogène, ce qui évite le stockage et le transport du dihydrogène produit par un reformeur externe, permet une transmission complète du dihydrogène produit lors du reformage interne, au compartiment anodique de la pile du fait de la proximité du module de reformage interne avec le compartiment anodique, et déplace ainsi l'équilibre chimique de la réaction intervenant à l'anode dans le sens de consommation du dihydrogène et donc dans le sens de production d'électricité. Egalement, le reformage interne améliore le bilan thermique de la pile puisqu'elle inclut alors la réaction endothermique (méthane + eau -> dihydrogène) à savoir celle du reformage interne, ainsi qu'une réaction exothermique (dihydrogène + ion carbonate -> eau + dioxyde de carbone) venant fournir la chaleur nécessaire à la réaction du reformage interne, cette dernière consommant ainsi la chaleur dégagée par la consommation du dihydrogène. Les performances de la pile sont donc accrues.
- Egalement avantageuses, les différentes valorisations possibles de l'énergie thermique excédentaire produite par le système pile à combustible :
   * Pour l'alimentation d'un procédé de désalinisation d'eau de mer,
   * Pour la production d'électricité additionnelle,
   * Pour l'alimentation d'un procédé de déshydratation de l'éthanol.

## Revendications

1. Dispositif de production d'énergie, comprenant une pile à combustible à haute température admettant comme combustible un
mélange de méthane et de vapeur d'eau à une température et une pression prédéterminées, ainsi qu'une unité de transformation d'un mélange gazeux d'éthanol et d'eau en un mélange de méthane et vapeur d'eau pour alimenter la pile, **caractérisé en ce que** la pression du mélange gazeux méthane et vapeur d'eau issu de l'unité de transformation (11) est supérieure la pression du mélangé méthane et vapeur d'eau admis par la pile, et exploitée comme source secondaire d'énergie.

2. Dispositif selon la revendication 1, **caractérisé en ce que** la pression du mélange gazeux méthane et vapeur d'eau issu de l'unité de transformation (11) est supérieure à 2 bar.

3. Dispositif selon la revendication 2, **caractérisé en ce que** la pression du mélange gazeux méthane et vapeur d'eau issu de l'unité de transformation (11) est comprise entre 10 et 40 bar.

4. Dispositif selon l'une des revendications 1 à 3, **caractérisé en ce que** l'unité de transformation est un reformeur et **en ce que** la pression du mélange gazeux méthane et vapeur d'eau sortant du reformeur est sensiblement égale à la pression du mélange gazeux d'éthanol et d'eau admis par le reformeur, le dispositif comprenant une unité de mise sous pression (12) d'un mélange liquide d'éthanol et d'eau, apte à fournir un mélange gazeux pressurisé d'éthanol et d'eau à la pression supérieure à celle du mélange méthane et vapeur d'eau admis par la pile et des moyens de chauffage du mélange gazeux pressurisé d'éthanol et d'eau.

5. Dispositif selon la revendication 4, **caractérisé en ce que** pour exploiter la pression supérieure du mélange gazeux sortant du reformeur, le dispositif comprend une turbine de conversion (15) en électricité (16) interposée entre l'unité de transformation (11) et la pile (3).

6. Dispositif selon la revendication 4 ou 5, **caractérisé en ce** la température du mélange méthane et vapeur d'eau produit par le reformeur (11) est supérieure à celle du mélange méthane et vapeur d'eau admis par la pile et exploitée comme source secondaire d'énergie.

7. Dispositif selon la revendication 6, **caractérisé en ce que** pour exploiter la chaleur produite par le reformeur (11), le dispositif comprend un échangeur thermique interposé entre le reformeur (11) et la pile (3).

8. Dispositif selon l'une des revendications 4 à 7, **caractérisé en ce que** le reformeur est le siège d'une réaction exothermique, et **en ce que** la chaleur dégagée par cette réaction exothermique est transférée par un échangeur thermique (18) vers le mélange d'éthanol et d'eau admis au sein du reformeur pour chauffer ce mélange.

9. Dispositif selon l'une des revendications 4 à 8, **caractérisé en ce que** le reformeur comprend un lit catalytique à base de métal, de préférence le nickel.

10. Dispositif selon l'une des revendications précédentes, **caractérisé en ce qu'**il comprend un échangeur thermique (21) permettant de transférer la chaleur produite par la pile à combustible au mélange d'eau et d'éthanol admis au sein de l'unité de transformation (11).

11. Dispositif selon la revendication 10, **caractérisé en ce qu'**environ la moitié de la chaleur produite par la pile est utilisée pour le chauffage du mélange d'eau et d'éthanol lors de son transit dans le circuit d'entrée de l'unité de transformation (11).

12. Dispositif selon la revendication 11, **caractérisé en ce qu'**il comprend un échangeur thermique (23) entre une deuxième partie (22) de la chaleur produite par la pile haute température (3) et un premier récepteur de chaleur (23, 24).

13. Dispositif selon la revendication 12, **caractérisé en ce que** le récepteur de chaleur est une turbine de conversion en électricité (24) de la deuxième partie (22) de la chaleur produite par la pile haute température (3) et/ou un échangeur thermique (23).

14. Dispositif selon la revendication 12, **caractérisé en ce que** le récepteur de chaleur est un système de désalinisation d'eau de mer utilisant la deuxième partie (22) de la chaleur produite par la pile haute température (3).

15. Dispositif selon l'une des revendications 1 à 14, **caractérisé en ce qu'**il comprend une recirculation du mélange gazeux produit par la pile vers le mélange d'eau et d'éthanol alimentant l'unité de transformation (11).

16. Dispositif selon la revendication 15, **caractérisé en ce que** la recirculation du mélange gazeux produit par la pile comprend un dispositif d'épuration du mélange gazeux apte à débarrasser ce mélange gazeux de composés gazeux indésirables tels que le dioxyde de carbone.

17. Procédé de production d'énergie, à partir d'un dispositif comprenant une pile à combustible à haute température admettant comme combustible un mélange de méthane et de vapeur d'eau à une température et une pression prédéterminées, ainsi qu'une unité de transformation d'un mélange gazeux d'éthanol et d'eau en un mélange de méthane et vapeur d'eau alimentant la pile, **caractérisé en ce que** la pression du mélange gazeux méthane et vapeur d'eau issu de l'unité de transformation (11) est supérieure la pression du mélange méthane et vapeur d'eau admis par la pile, le procédé comprenant une étape d'exploitation de cette pression supérieure comme source secondaire d'énergie.

18. Utilisation du dispositif selon l'une quelconque des revendications 1 à 16 pour produire de l'électricité, de la chaleur et/ou du méthane.

19. Utilisation selon la revendication 18, **caractérisée en ce que** la chaleur et/ou l'électricité produites alimentent un dispositif de désalinisation d'eau de mer et/ou un dispositif de déshydratation d'éthanol.

20. Utilisation selon la revendication 18, **caractérisée en ce que** le méthane produit par l'unité de transformation sert de système d'appoint à une pile à combustible admettant du méthane comme combustible, alimentée par une source principale de méthanisation permettant de pallier les variations de débit des méthaniseurs et de stabiliser l'alimentation en méthane.

## Claims

1. A device for producing energy, comprising a high temperature fuel cell accepting as fuel a mixture of methane and steam at predetermined temperature and pressure, and a unit for converting a gaseous ethanol-water mixture to a methane-steam mixture to supply the fuel cell, **characterized in that** the pressure of the gaseous methane-steam mixture derived from the converter unit (11) is higher than the pressure of the methane-steam mixture accepted by the fuel cell and is used as secondary energy source.

2. The device according to claim 1, **characterized in that** the pressure of the gaseous methane-steam mixture derived from the converter unit (11) is higher than 2 bar.

3. The device according to claim 2, **characterized in that** the pressure of the gaseous methane-steam mixture derived from the converter unit (11) is between 10 and 40 bar.

4. The device according to any of claims 1 to 3, **characterized in that** the converter unit is a reformer and **in that** the pressure of the gaseous methane-steam mixture leaving the reformer is substantially equal to the pressure of the gaseous ethanol-water mixture accepted by the reformer, the device comprising a pressurizing unit (12) to pressurize a liquid ethanol-water mixture, capable of providing a pressurized gaseous ethanol-water mixture at a higher pressure than the pressure of the methane-steam mixture accepted by the fuel cell, and means for heating the pressurized gaseous ethanol-water mixture.

5. The device according to claim 4 **characterized in that**, to make use of the higher pressure of the gaseous mixture leaving the reformer, the device comprises a turbine (15) for conversion to electricity (16) interpositioned between the converter unit (11) and the fuel cell (3).

6. The device according to claim 4 or 5, **characterized in that** the temperature of the methane-steam mixture produced by the reformer (11) is higher than the temperature of the methane-steam mixture accepted by the fuel cell and is used as secondary energy source.

7. The device according to claim 6 **characterized in that**, to make use of the heat produced by the reformer (11), the device comprises a heat exchanger interpositioned between the reformer (11) and the fuel cell (3).

8. The device according to one of claims 4 to 7, **characterized in that** the reformer is the site of an exothermal reaction, and **in that** the heat released by this exothermal reaction is transferred via a heat exchanger (18) to the ethanol-water mixture input into the reformer, to heat this mixture.

9. The device according to one of claims 4 to 8, **characterized in that** the reformer comprises a catalytic bed containing metal, preferably nickel.

10. The device according to one of the preceding claims, **characterized in that** it comprises a heat exchanger (21) allowing the transfer of the heat produced by the fuel cell to the ethanol-water mixture input into the converter unit (11).

11. The device according to claim 10, **characterized in that** about one half of the heat produced by the fuel cell is used to heat the ethanol-water mixture when it transits through the input circuit of the converter unit (11).

12. The device according to claim 11, **characterized in that** it comprises a heat exchanger (23) between a second part (22) of the heat produced by the high temperature fuel cell (3) and a first heat receiver (23, 24).

13. The device according to claim 12, **characterized in that** the heat receiver is a turbine (24) for converting to electricity the second part (22) of the heat produced by the high temperature fuel cell (3) and/or a heat exchanger (23).

14. The device according to claim 12, **characterized in that** the heat receiver is a system for desalting seawater using the second part (22) of the heat produced by the high temperature fuel cell (3).

15. The device according to one of claims 1 to 14, **characterized in that** it comprises recirculation of the gaseous mixture produced by the fuel cell towards the water-ethanol mixture supplying the converter unit (11).

16. The device according to claim 15, **characterized in that** the recirculation of the gaseous mixture produced by the fuel cell comprises a device for purifying the gaseous mixture capable of ridding this gaseous mixture of undesirable gaseous compounds such as carbon dioxide.

17. A method for producing energy from a device comprising a high temperature fuel cell accepting as fuel a mixture of methane and steam at predetermined temperature and pressure, and a unit for converting a gaseous ethanol-water mixture to a methane-steam mixture supplying the fuel cell, **characterized in that** the pressure of the gaseous methane-steam mixture derived from the converter unit (11) is higher than the pressure of the methane-steam mixture accepted by the fuel cell, the method comprising a step to make use of this higher pressure as secondary energy source.

18. The use of the device according to any of claims 1 to 16 for producing electricity, heat and/or methane.

19. The use according to claim 18 **characterized in that** the produced heat and/or electricity supplies a device for desalting seawater and/or an ethanol dehydrating device.

20. The use according to claim 18, **characterized in that** the methane produced by the converter unit is used as backup system for a fuel cell accepting methane as fuel supplied by a main methanisation source, to offset variations in the flow rate of methanisers and to stabilize the methane supply.

## Patentansprüche

1. Vorrichtung zur Erzeugung von Energie, die eine Hochtemperatur-Brennstoffzelle umfasst, die als Brennstoff ein Gemisch aus Methan und Wasserdampf mit einer vorbestimmten Temperatur und Druck zulässt, sowie eine Verarbeitungseinheit eines gasförmigen Gemischs aus Ethanol und Wasser in ein Gemisch aus Methan und Wasserdampf, um die Zelle zu versorgen, **dadurch gekennzeichnet, dass** der Druck des gasförmigen Gemischs aus Methan und Wasserdampf aus der Verarbeitungseinheit (11) höher ist als der Druck des Gemischs aus Methan und Wasserdampf, das die Zelle zulässt, und als sekundäre Energiequelle genutzt wird.

2. Vorrichtung nach Anspruch 1, **dadurch gekennzeichnet, dass** der Druck des gasförmigen Gemischs aus Methan und Wasserdampf aus der Verarbeitungseinheit (11) höher als 2 Bar ist.

3. Vorrichtung nach Anspruch 2, **dadurch gekennzeichnet, dass** der Druck des gasförmigen Gemischs aus Methan und Wasserdampf aus der Verarbeitungseinheit (11) zwischen 10 und 40 Bar inklusive ist.

4. Vorrichtung nach einem der Ansprüche 1 bis 3, **dadurch gekennzeichnet, dass** die Verarbeitungseinheit ein Reformer ist und dass der Druck des gasförmigen Gemischs aus Methan und Wasserdampf, das aus dem Reformer austritt, etwa gleich dem Druck des gasförmigen Gemischs aus Ethanol und Wasser ist, das der Reformer zulässt, wobei die Vorrichtung eine Einheit (12) umfasst, die ein flüssiges Gemisch aus Ethanol und Wasser unter Druck setzt, die imstande ist, ein gasförmiges Gemisch aus Ethanol und Wasser unter Druck mit dem Druck zu liefern, der höher ist als der Druck des Gemischs aus Methan und Wasserdampf, das die Zelle zulässt, und Heizmittel des gasförmigen Druckgemischs aus Ethanol und Wasser.

5. Vorrichtung nach Anspruch 4, **dadurch gekennzeichnet, dass**, um den höheren Druck des gasförmigen Gemischs aus dem Reformer zu nutzen, die Vorrichtung eine Turbine zur Umwandlung (15) in Strom (16) umfasst, die zwischen der Verarbeitungseinheit (11) und der Zelle (3) angeordnet ist.

6. Vorrichtung nach Anspruch 4 oder 5, **dadurch gekennzeichnet, dass** die Temperatur des vom Reformer (11) produzierten Gemischs aus Methan und Wasserdampf höher ist als die des Gemischs aus Methan und Wasserdampf, das die Zelle zulässt, und als sekundäre Energiequelle genutzt wird.

7. Vorrichtung nach Anspruch 6, **dadurch gekennzeichnet, dass**, um die vom Reformer (11) produzierte Energie zu nutzen, die Vorrichtung einen Wärmetauscher umfasst, der zwischen dem Reformer (11) und der Zelle (3) angeordnet ist.

8. Vorrichtung nach einem der Ansprüche 4 bis 7, **dadurch gekennzeichnet, dass** der Reformer der Sitz einer exothermen Reaktion ist und dass die von dieser exothermen Reaktion abgegebene Energie von einem Wärmetauscher (18) zu dem Gemisch aus Ethanol und Wasser übertragen wird, das der Reformer zulässt, um dieses Gemisch zu erwärmen.

9. Vorrichtung nach einem der Ansprüche 4 bis 8, **dadurch gekennzeichnet, dass** der Reformer ein Katalysebett auf der Basis von Metall umfasst, das vorzugsweise Nickel ist.

10. Vorrichtung nach einem der vorangehenden Ansprüche, **dadurch gekennzeichnet, dass** sie einen Wärmetauscher (21) umfasst, der es erlaubt, die von der Brennstoffzelle produzierte Wärme auf das Gemisch aus Wasser und Ethanol, das die Verarbeitungseinheit (11) zulässt, zu übertragen.

11. Vorrichtung nach Anspruch 10, **dadurch gekennzeichnet, dass** zirka die Hälfte der von der Zelle produzierte Wärme zum Erwärmen des Gemischs aus Wasser und Ethanol während seines Transits in den Eingangskreis der Verarbeitungseinheit (11) verwendet wird.

12. Vorrichtung nach Anspruch 11, **dadurch gekennzeichnet, dass** sie einen Wärmetauscher (23) zwischen einem zweiten Abschnitt (22) der von der Hochtemperaturzelle (3) erzeugten Wärme und einem Wärmerezeptor (23, 24) umfasst.

13. Vorrichtung nach Anspruch 12, **dadurch gekennzeichnet, dass** der Wärmerezeptor eine Stromumwandlungsturbine (24) des zweiten Abschnitts (22) der von der Hochtemperaturzelle (3) und/oder einem Wärmetauscher (23) erzeugten Wärme ist.

14. Vorrichtung nach Anspruch 12, **dadurch gekennzeichnet, dass** der Wärmerezeptor ein Meerwasserentsalzungssystem ist, das den zweiten Abschnitt (22) der von der Hochtemperaturzelle (3) erzeugten Wärme verwendet.

15. Vorrichtung nach einem der Ansprüche 1 bis 14, **dadurch gekennzeichnet, dass** sie eine Rezirkulierung des von der Zelle erzeugten gasförmigen Gemischs in Richtung des Gemischs aus Wasser und Ethanol umfasst, das die Verarbeitungseinheit (11) versorgt.

16. Vorrichtung nach Anspruch 15, **dadurch gekennzeichnet, dass** die Rezirkulierung des von der Zelle erzeugten gasförmigen Gemischs eine Vorrichtung zur Reinigung des gasförmigen Gemischs umfasst, die imstande ist, dieses gasförmige Gemisch von unerwünschten gasförmigen Verbindungen wie Kohlendioxid zu befreien.

17. Verfahren zur Erzeugung von Energie mit einer Vorrichtung, die eine Hochtemperatur-Brennstoffzelle umfasst, die als Brennstoff ein Gemisch aus Methan und Wasserdampf mit einer vorbestimmten Temperatur und Druck zulässt, sowie eine Verarbeitungseinheit eines gasförmigen Gemischs aus Ethanol und Wasser in ein Gemisch aus Methan und Wasserdampf, das die Zelle versorgt, **dadurch gekennzeichnet, dass** der Druck des gasförmigen Gemischs aus Methan und Wasserdampf aus der Verarbeitungseinheit (11) höher ist als der Druck des Gemischs aus Methan und Wasserdampf, das die Zelle zulässt, wobei das Verfahren einen Schritt der Nutzung dieses höheren Drucks als sekundäre Energiequelle umfasst.

18. Verwendung der Vorrichtung nach einem der Ansprüche 1 bis 16 zur Erzeugung von Strom, Wärme und/oder Methan.

19. Verwendung nach Anspruch 18, **dadurch gekennzeichnet, dass** die erzeugte Wärme und/oder der Strom eine Meerwasserentsalzungsvorrichtung und/oder eine Vorrichtung zur Entwässerung von Ethanol versorgen.

20. Verwendung nach Anspruch 18, **dadurch gekennzeichnet, dass** das von der Verarbeitungseinheit erzeugte Methan als Zusatzsystem für eine Brennstoffzelle dient, die Methan als Brennstoff zulässt, die von einer Haupt-Methanisierungsquelle versorgt wird, die es erlaubt, die Leistungsschwankungen der Biogasöfen auszugleichen und die Methanversorgung zu stabilisieren.
